# EUROPÄISCHE PATENTSCHRIFT

(11) **EP 4 264 193 B1**
(45) Veröffentlichungstag und Bekanntmachung des Hinweises auf die Patenterteilung: **01.01.2025**
(21) Anmeldenummer: 21824499.4
(22) Anmeldetag: 26.11.2021
(51) Int. Cl.: G01F 1/32, G01F 1/325, G01F 25/00

(54) **VORTEX-DURCHFLUSSMESSGERÄT UND VERFAHREN ZUM ÜBERPRÜFEN EINES VORTEX-DURCHFLUSSMESSGERÄTS**
VORTEX FLOW METER AND METHOD FOR TESTING A VORTEX FLOW METER
DÉBITMÈTRE À VORTEX ET PROCÉDÉ DE TEST DE DÉBITMÈTRE À VORTEX

(30) Priorität: 17.12.2020 DE 102020134066
(43) Veröffentlichungstag der Anmeldung: 25.10.2023
(73) Patentinhaber: Endress+Hauser Flowtec AG, 4153 Reinach (CH)
(72) Erfinder: SCHIRMEIER, Timo, 79650 Schopfheim (DE); TANNER, Werner, 4415 Lausen (CH); SCHWEIZER, Dieter, 4416 Bubendorf (CH)
(74) Vertreter: Hahn, Christian
(86) Internationale Anmeldenummer: PCT/EP2021/083216
(87) Internationale Veröffentlichungsnummer: WO 2022/128418

(56) Entgegenhaltungen:
- EP-B1- 2 274 510
- US-A- 4 164 143
- US-A- 4 910 994
- US-A- 6 147 433
- US-A1- 2003 038 644
- US-B2- 9 310 412

## Beschreibung

Die Erfindung betrifft ein Vortex-Durchflussmessgerät zum Messen eines Durchflusses eines durch eine Rohrleitung strömenden Mediums sowie ein Verfahren zum Überprüfen eines Vortex-Durchflussmessgeräts.

Vortex-Durchflussmessgeräte wie beispielsweise in den Dokumenten DE102009001525A1 und US 4 910 994 A gezeigt, weisen ein Messrohr auf, in welchem ein Staukörper zum Erzeugen von Strömungswirbeln und ein Paddel zum Erfassen dieser Strömungswirbel angeordnet sind. Das Paddel wird dabei durch die Strömungswirbel ausgelenkt und verursacht dabei Verformungen eines Grundkörpers, welche üblicherweise mittels eines Piezoelements erfasst werden. Eine Messqualität hängt dabei von einer Anbindung des Piezoelements und/oder von einem Zustand des Piezoelements ab.

Aufgabe der Erfindung ist es, ein Vortex-Durchflussmessgerät mit einer einfachen und robusten Überprüfbarkeit eines Gerätezustands sowie ein Verfahren zum Überprüfen des Vortex-Durchflussmessgeräts vorzuschlagen.

Die Aufgabe wird gelöst durch ein Vortex-Durchflussmessgerät gemäß dem unabhängigen Anspruch 1 sowie durch ein Verfahren gemäß dem unabhängigen Anspruch 6.

Ein erfindungsgemäßes Vortex-Durchflussmessgerät zum Messen eines Durchflusses eines durch
eine Rohrleitung strömenden Mediums umfasst:
ein Messrohr zum Führen des Mediums mit einer Messrohrwandung und einem durch die Messrohrwandung ausgebildeten Messrohrlumen, wobei die Messrohrwandung eine Öffnung aufweist;
einen im Messrohr angeordneten Staukörper;
eine Sensorvorrichtung, welche dazu eingerichtet ist, durch den Staukörper verursachte Strömungswirbel zu erfassen,
wobei die Sensorvorrichtung ein Paddel, einen Sensorgrundkörper und ein Piezoelement aufweist, wobei der Sensorgrundkörper in der Öffnung angeordnet ist und mit der Messrohrwandung mediendicht abschließt,
wobei das Paddel in das Messrohrlumen hineinragt und dazu eingerichtet ist, von Strömungswirbeln aus einer kräftefreien Ruheposition ausgelenkt zu werden,
wobei das Piezoelement auf einer dem Messrohr abgewandten Rückseite des Sensorgrundkörpers angeordnet ist und dazu eingerichtet ist, durch Auslenkungen des Paddels verursachte Verformungen des Sensorgrundkörpers zu erfassen und in ein elektrisches Messsignal zu wandeln;
eine elektronische Betriebsschaltung, welche dazu eingerichtet ist, das Messsignal mittels einer Auswerteschaltung zu erfassen und auszuwerten und Durchflussmesswerte bereitzustellen,
wobei die elektronische Betriebsschaltung eine Messschaltung umfassend einen Operationsverstärker mit einem invertierenden Eingang, einem nichtinvertierenden Eingang und einem Ausgang sowie einen ersten Kondensator aufweist,
wobei der erste Kondensator eine Rückkopplung zwischen dem Ausgang und dem invertierendem Eingang oder dem nichtinvertierenden Eingang ausbildet, wobei der jeweilige Eingang ein Messeingang ist,
wobei der jeweils andere Eingang ein Referenzeingang ist und mit einer ersten Referenzspannung beaufschlagbar ist, und wobei der Ausgang mit einer Auswerteschaltung der elektronischen Betriebsschaltung verbunden ist,
wobei das Piezoelement auf einer dem Operationsverstärker abgewandten Seite mit einer zweiten Referenzspannung beaufschlagbar ist,
wobei die Messschaltung einen ersten Schalter aufweist,
wobei die elektronische Betriebsschaltung dazu eingerichtet ist, das Piezoelement über den ersten Schalter mittels einer ersten Schalterstellung mit dem Messeingang des Operationsverstärkers zu verbinden und mittels einer zweiten Schalterstellung mit einer ersten Ladespannung zu laden,
wobei die elektronische Betriebsschaltung mittels der Auswerteschaltung dazu eingerichtet ist, aus einem Entladevorgang des Piezoelements eine Information bzgl. eines Zustands des Piezoelements und/oder einer elektrischen Verbindung des Piezoelements mit der elektronischen Betriebsschaltung und/oder einer mechanischen Verbindung mit dem Sensorgrundkörper abzuleiten.

Mittels des ersten Schalters kann also durch Entladen des Piezoelements nach Laden mit der ersten Ladespannung kann aus dem Entladevorgang, bzw. aus einem während des Entladevorgangs mittels des Operationsverstärkers über den Ausgang ausgegeben Entlademesssignals auf besonders einfache Weise eine Information bzgl. des Zustands gewonnen werden.

Ein Eingangssignal beim Messeingang während der Entladung des Piezoelements setzt sich dabei zusammen aus einer Entladespannung sowie hochfrequenter Spannungsoszillationen verursacht durch das Schalten in die erste Schalterstellung, wobei ein Verlauf der Entladespannung Information bzgl. einer Kapazität des Piezoelements trägt, wobei die Oszillationen eine Information bzgl. des Zustands des Piezoelements und/oder der elektrischen Verbindung des Piezoelements mit der elektronischen Betriebsschaltung und/oder der mechanischen Verbindung mit dem Sensorgrundkörper trägt.

Die Entladung des Piezoelements findet dabei über den Messeingang des Operationsverstärkers oder falls vorhanden über einen Parallelwiderstand zum ersten Kondensator statt.

In einer Ausgestaltung weist die Messchaltung einen zweiten Kondensator und einen zweiten Schalter auf,
wobei der zweite Kondensator mit der zweiten Referenzspannung beaufschlagbar ist,
wobei die elektronische Betriebsschaltung dazu eingerichtet ist, den zweiten Kondensator über den zweiten Schalter mittels einer ersten Schalterstellung mit dem Messeingang des Operationsverstärkers zu verbinden und mittels einer zweiten Schalterstellung mit einer zweiten Ladespannung zu laden,
wobei die erste Ladespannung und die zweite Referenzspannung eine erste Differenzspannung definieren, und wobei die zweite Ladespannung und die zweite Referenzspannung eine zweite Differenzspannung definieren,
wobei die zweite Differenzspannung eine zur ersten Differenzspannung umgekehrte Polarität aufweist,
wobei der zweite Kondensator und das Piezoelement über die Schalter parallelschaltbar sind.

Auf diese Weise kann aus dem Eingangssignal der Einfluss der Entladespannung abgemildert werden, so dass die hochfrequenten Oszillationen mit hoher Spannungsauflösung ausgelesen werden können.

In einer Ausgestaltung ist die elektronische Betriebsschaltung dazu eingerichtet, bezüglich der zweiten Referenzspannung das Piezoelement mit einer ersten Ladung und den zweiten Kondensator mit einer zweiten Ladung zu laden,
wobei ein Betrag der ersten Ladung und ein Betrag der zweiten Ladung weniger als 10% und insbesondere weniger als 5% von einem Mittelwert der Ladungen abweichen.

Auf diese Weise kann eine ausreichend hohe Spannungsauflösung erreicht werden.

In einer Ausgestaltung weist der Operationsverstärker einen Eingangsspannungsbereich mit einem ersten Grenzwert und einem zweiten Grenzwert und einen Mittelwert auf, wobei die erste Referenzspannung beispielweise weniger als 10%, und insbesondere weniger als 5% und bevorzugt weniger als 3% vom Mittelwert abweicht.

Auf diese Weise kann das Eingangssignal beim Messeingang im Wesentlichen ohne Verzerrungen und mit ausreichend hoher Verstärkung auf den Ausgang abgebildet werden.

In einer Ausgestaltung weist das Piezoelement eine Maximalkapazität auf, wobei der zweite Kondensator eine Nennkapazität aufweist,
wobei die Nennkapazität mindestens so groß ist wie die Maximalkapazität ist, und beispielsweise mindestens 5% und insbesondere mindestens 10% und bevorzugt mindestens 20% größer ist als die erste Maximalkapazität.

Eine Dicke des beispielsweise scheibenförmigen Piezoelements ist temperaturabhängig, da auch ein Herstellungsmaterial des Piezoelements einen Wärmeausdehnungskoeffizienten ungleich Null hat. Beispielsweise kann das Piezoelement bei steigenden Temperaturen eine Erhöhung seine Kapazität erfahren. Betriebstemperaturgrenzen oder Medientemperaturgrenzen oder Prozesstemperaturgrenzen definieren somit einen Kapazitätsbereich bzw. Maximalkapazität des Piezoelements.

Durch Verwendung eines zweiten Kondensators mit einer Nennkapazität von mindestens der Maximalkapazität kann sichergestellt werden, dass der zweite Kondensator mit einer zweiten Ladung geladen werden kann, welche betragsmäßig mindestens gleich groß ist wie die erste Ladung.

Dadurch ist eine Kapazitätsdrift des Piezoelements beispielsweise durch Temperaturänderung unproblematisch.

Bei einem erfindungsgemäßen Verfahren zum Überprüfen eines Piezoelements eines erfindungsgemäßen Vortex-Durchflussmessgeräts wird in einem ersten Verfahrensschritt der erste Schalter aus einer ersten Schalterstellung in eine zweite Schalterstellung geschaltet wird, um das Piezoelement zu laden,
wobei nach Laden des Piezoelements in einem zweiten Verfahrensschritt der erste Schalter in die erste Schalterstellung geschaltet wird, um das Piezoelement zu entladen,
wobei die elektronische Betriebsschaltung den Entladevorgang mittels des Operationsverstärkers erfasst und aus einem Messsignal erzeugt durch den Entladevorgang eine Information bezüglich eines Zustands des Piezoelements und/oder einer elektrischen Anbindung des Piezoelements ableitet.

In einer Ausgestaltung wird im ersten Verfahrensschritt der zweite Schalter aus einer ersten Schalterstellung in eine zweite Schalterstellung geschaltet wird, um den zweiten Kondensator zu laden,
wobei im zweiten Verfahrensschritt gleichzeitig zum ersten Schalter der zweite Schalter in die erste Schalterstellung geschaltet wird, um den zweiten Kondensator zu entladen.

Auf diese Weise kann aus dem Eingangssignal der Einfluss der Entladespannung abgemildert werden, so dass die hochfrequenten Oszillationen mit hoher Spannungsauflösung ausgelesen werden können.

Im Folgenden wird die Erfindung anhand von Ausführungsbeispielen beschrieben.
Fig. 1 skizziert ein beispielhaftes Vortex-Durchflussmessgerät;
Fig. 2 skizziert eine beispielhafte erfindungsgemäße Messschaltung;
Fig. 3 skizziert ein beispielhaftes erfindungsgemäßes Verfahren.

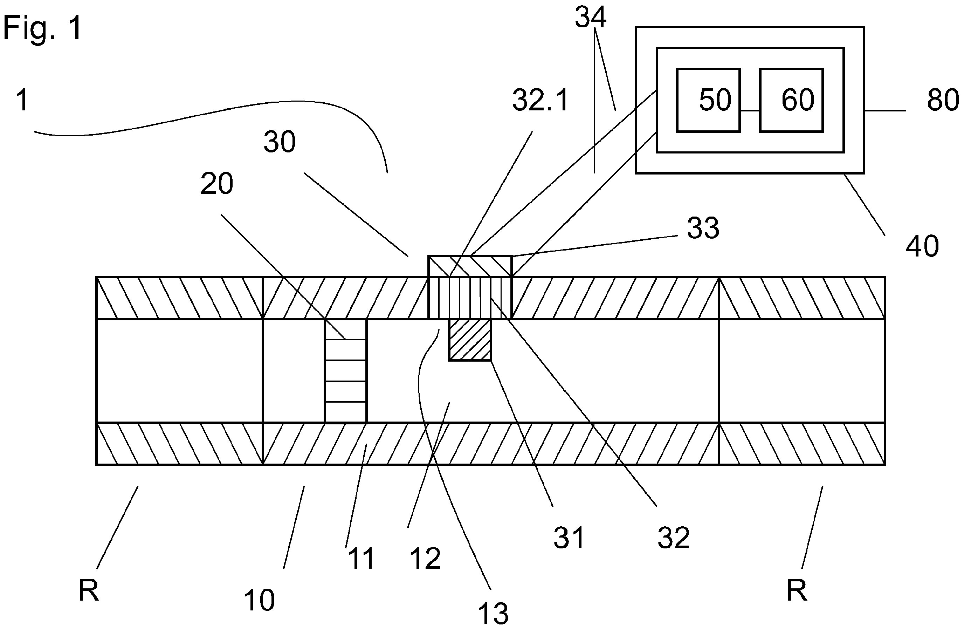

Fig. 1 skizziert einen schematischen Längsschnitt durch ein beispielhaftes Vortex-Durchflussmessgerät 1, welches mittels eines Messrohrs 10 in einer Rohrleitung R angebracht ist. Das Messrohr 10 weist dabei eine Messrohrwandung 11 auf, welche ein Messrohrlumen 12 ausbildet und eine Öffnung 13 zur Aufnahme eines Sensorgrundkörpers 32 einer Sensorvorrichtung 20 aufweist, wobei der Sensorgrundkörper die Öffnung 13 mediendicht verschließt.

Im Messrohr ist ein Staukörper 20 angeordnet, welcher in einem fließenden Medium Wirbel und somit lokale Druckschwankungen erzeugt, welche von einem stromabwärts angeordneten Paddel 31 der Sensorvorrichtung erfasst werden. Das Paddel wird dabei aus einer kräftefreien Ruhelage ausgelenkt und verformt dabei den Sensorgrundkörper. Auf einer Rückseite 32.1 des Sensorgrundkörpers ist ein Piezoelement 33 angeordnet, welches dazu eingerichtet ist, die Verformungen des Sensorgrundkörpers in ein Messsignal in Form eines Verlaufs einer elektrischen Spannung zu wandeln. Eine Messschaltung 50 einer elektronischen Betriebsschaltung 40 ist dazu eingerichtet, die elektrische Spannung mittels einer elektrischen Anbindung 34 abzugreifen. Das Piezoelement kann dabei im Wesentlichen scheibenförmig mit zwei gegenüberliegenden Seitenflächen ausgebildet sein, welche Seitenflächen jeweils eine elektrisch leitfähige Beschichtung zwecks Abgriff der durch Verformung erzeugten elektrischen Spannung aufweisen. Eine Auswerteschaltung 60 der elektronischen Betriebsschaltung ist dazu eingerichtet, die elektrische Spannung bzw. einen Verlauf der elektrischen Spannung auszuwerten.

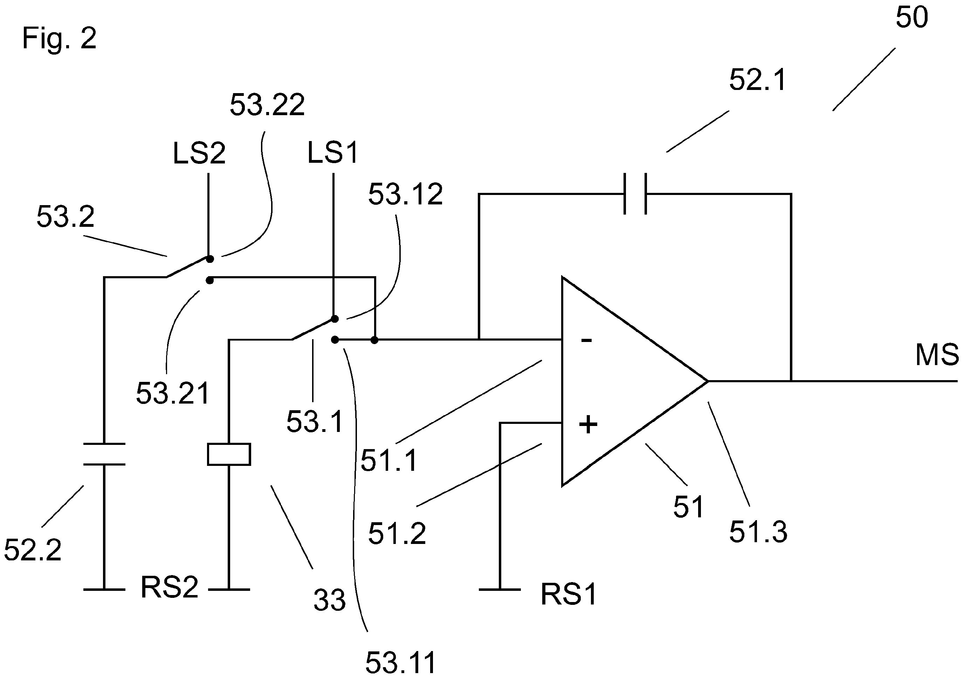

Fig. 2 skizziert eine beispielhafte erfindungsgemäße Ausführung einer Messschaltung 50 einer elektronischen Betriebsschaltung 40 eines Vortex-Durchflussmessgeräts und ein daran angeschlossenes Piezoelement 33. Die Messschaltung weist einen Operationsverstärker 51 mit einem nichtinvertierenden Eingang 51.1, einem invertierenden Eingang 51.2 und einem Ausgang 51.3. Ein erster Kondensator 52.1 verbindet dabei einen Messeingang, hier der invertierende Eingang, mit dem Ausgang des Operationsverstärkers, wobei das Piezoelement 33 dabei mit dem Messeingang, hier der invertierende Eingang verbindbar ist. Das Piezoelement ist dabei dazu eingerichtet, Verformungen des Sensorgrundkörpers in ein Messsignal zu wandeln.

Der Operationsverstärker wird über einen Referenzeingang, hier der nichtinvertierende Eingang mit einer Referenzspannung RS1 beaufschlagt, welche bevorzugt in einem mittleren Spannungsbereich eines Eingangsspannungsbereichs des Operationsverstärkers liegt. Auf diese Weise kann eine Oszillation einer den Messeingang beaufschlagenden elektrischen Spannung mit allenfalls geringer Verzerrung und ausreichender Verstärkung auf den Ausgang 51.3 abgebildet werden, da die Oszillationen somit nicht in einen Aussteuerbereich des Operationsverstärkers gelangen. In einer Ausgestaltung weist der Operationsverstärker dabei einen Eingangsspannungsbereich mit einem ersten Grenzwert und einem zweiten Grenzwert und einen Mittelwert auf, wobei die erste Referenzspannung beispielweise weniger als 30%, und insbesondere weniger als 20% und bevorzugt weniger als 10% vom Mittelwert abweicht.

Erfindungsgemäß ist zwischen Piezoelement und Messeingang ein erster Schalter 53.1 mit einer ersten Schalterstellung 53.11 und einer zweiten Schalterstellung 53.12 angeordnet, wobei in der ersten Schalterstellung das Piezoelement mit dem Messeingang verbunden ist. Zwecks Überprüfung eines Zustands des Piezoelements und/oder einer elektrischen Verbindung des Piezoelements mit der elektronischen Betriebsschaltung und/oder einer mechanischen Verbindung mit dem Sensorgrundkörper kann das Piezoelement mittels des ersten Schalters in der zweiten Schalterstellung mit einer ersten Ladespannung LS1 geladen werden. Bei Schalten zurück in die erste Schalterstellung wird der Messeingang des Operationsverstärkers entlädt sich das Piezoelement 33 über den Messeingang in einer charakteristischen Art und Weise. Ein Eingangssignal beim Messeingang während der Entladung des Piezoelements setzt sich dabei zusammen aus einer Entladespannung sowie hochfrequenter Spannungsoszillationen verursacht durch das Schalten in die erste Schalterstellung, wobei ein Verlauf der Entladespannung Information bzgl. einer Kapazität des Piezoelements trägt, wobei die Oszillationen eine Information bzgl. des Zustands des Piezoelements und/oder der elektrischen Verbindung des Piezoelements mit der elektronischen Betriebsschaltung und/oder der mechanischen Verbindung mit dem Sensorgrundkörper trägt.

Das Piezoelement ist auf einer dem Operationsverstärker abgewandten Seite mit einer zweiten Referenzspannung beaufschlagbar, wobei die zweite Referenzspannung weniger als 30%, und insbesondere weniger als 20% und bevorzugt weniger als 10% von der ersten Referenzsspannung abweicht, wobei die zweite Referenzspannung beispielsweise gleich zur ersten Referenzspannung sein kann. Auf diese Weise kann eine Oszillation einer den Messeingang beaufschlagenden elektrischen Spannung mit allenfalls geringer Verzerrung und ausreichender Verstärkung auf den Ausgang 51.3 abgebildet werden, da die Oszillationen somit nicht in einen Aussteuerbereich des Operationsverstärkers gelangen.

Parallel zum ersten Kondensator 52.1 kann ein Widerstandselement geschaltet sein (nicht gezeigt), welches dazu eingerichtet ist, eine vollständige Aufladung des ersten Kondensators zu verhindern. Das Widerstandselement ist dabei hochohmig, so dass eine Dynamik des Eingangssignals des Piezoelements nur unwesentlich beeinflusst wird. Ein Fachmann kann ein solches Widerstandselement ohne Probleme auswählen.

In einer Ausgestaltung der Erfindung kann wie hier gezeigt ein zweiter Kondensator 52.2 eingerichtet sein, welcher sich über einen zweiten Schalter 53.2 parallel zum Piezoelement schalten lässt. Erfindungsgemäß ist der zweite Kondensator mit der zweiten Referenzspannung beaufschlagbar, wobei die elektronische Betriebsschaltung 40 dazu eingerichtet ist, den zweiten Kondensator über den zweiten Schalter 53.2 mittels einer ersten Schalterstellung 53.21 mit dem Messeingang des Operationsverstärkers zu verbinden und mittels einer zweiten Schalterstellung 53.22 mit einer zweiten Ladespannung LS2 zu laden, wobei die erste Ladespannung und die zweite Referenzspannung eine erste Differenzspannung definieren, und wobei die zweite Ladespannung und die zweite Referenzspannung eine zweite Differenzspannung definieren, wobei die zweite Differenzspannung eine zur ersten Differenzspannung umgekehrte Polarität aufweist. Der zweite Kondensator und das Piezoelement sind über die Schalter 53.1, 53.2 mittels der jeweiligen ersten Schalterstellung 53.11, 53.21 parallelschaltbar.

Insbesondere ist die elektronische Betriebsschaltung 40 dazu eingerichtet, bezüglich der zweiten Referenzspannung das Piezoelement 33 mit einer ersten Ladung und den zweiten Kondensator mit einer zweiten Ladung zu laden, wobei ein Betrag der ersten Ladung und ein Betrag der zweiten Ladung weniger als 10% und insbesondere weniger als 5% von einem Mittelwert der Ladungen abweichen. Die elektronische Betriebsschaltung kann beispielsweise über Zeitintegration von Ladeströmen Ladungen bestimmen. Durch gleichzeitiges Schalten des ersten Schalters und des zweiten Schalters in die jeweilige erste Schaltung werden das Piezoelement und der zweite Kondensator parallelgeschaltet, so dass sich die Entladekurve des zweiten Kondensators und die Entladekurve des Piezoelements kompensieren. Auf diese Weise wird der Messeingang des Operationsverstärkers im Wesentlichen nur durch die Oszillationen des Piezoelements beaufschlagt, welche somit besser verstärkt werden können als ohne Kompensation der Entladekurven.

In einer Ausgestaltung weist das Piezoelement eine Maximalkapazität auf, wobei der zweite Kondensator eine Nennkapazität aufweist,
wobei die Nennkapazität mindestens so groß ist wie die Maximalkapazität ist, und beispielsweise mindestens 5% und insbesondere mindestens 10% und bevorzugt mindestens 20% größer ist als die erste Maximalkapazität.

Eine Dicke des beispielsweise scheibenförmigen Piezoelements ist temperaturabhängig, da auch ein Herstellungsmaterial des Piezoelements einen Wärmeausdehnungskoeffizienten ungleich Null hat. Typischerweise ist der Wärmeausdehnungskoeffizient größer Null, so dass das Piezoelement bei fallenden Temperaturen schrumpft und dabei seine Kapazität erhöht. Eine minimale Betriebstemperatur oder Medientemperatur oder Prozesstemperatur definiert somit eine maximale Kapazität des Piezoelements.

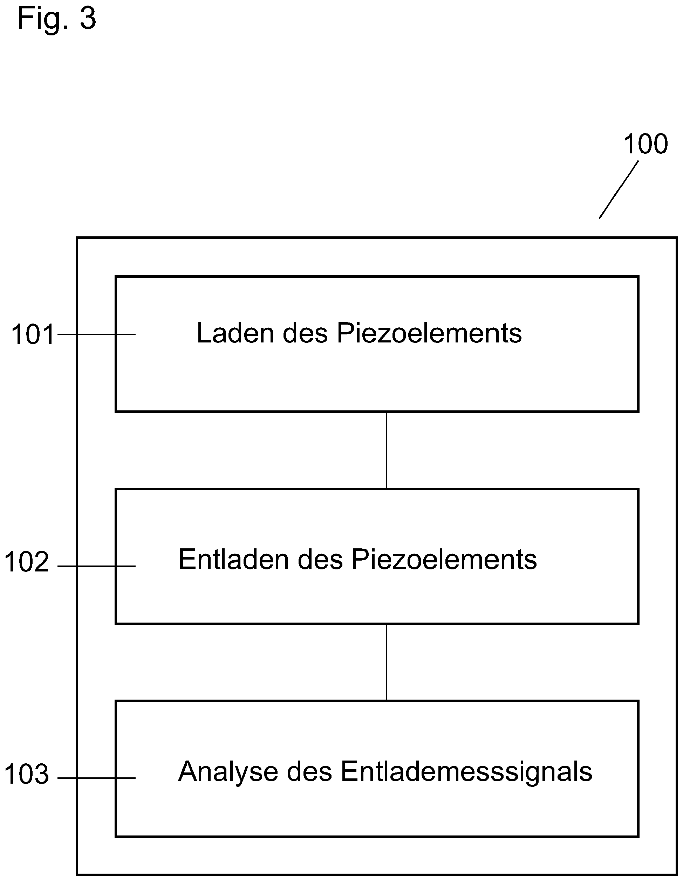

Fig. 3 skizziert den Ablauf eines beispielhaften erfindungsgemäßen Verfahrens, wobei in einem ersten Verfahrensschritt 101 der erste Schalter 53.1 aus der ersten Schalterstellung 53.11 in die zweite Schalterstellung 53.12 geschaltet wird, um das Piezoelement zu laden, wobei nach Laden des Piezoelements 33 in einem zweiten Verfahrensschritt 102 der erste Schalter in die erste Schalterstellung geschaltet wird, um das Piezoelement zu entladen, wobei die elektronische Betriebsschaltung 40 den Entladevorgang erfasst und in einem dritten Verfahrensschritt 103 aus einem Entlademesssignal eine Information bezüglich eines Zustands des Piezoelements 33 und/oder einer elektrischen Anbindung 34 des Piezoelements ableitet.

In einer Ausgestaltung wird im ersten Verfahrensschritt 101 der zweite Schalter 53.2 aus einer ersten Schalterstellung 53.21 in eine zweite Schalterstellung 53.22 geschaltet wird, um den zweiten Kondensator 52.2 zu laden, wobei im zweiten Verfahrensschritt 102 gleichzeitig zum ersten Schalter 53.1 der zweite Schalter 53.2 in die jeweilige erste Schalterstellung 53.11, 53.21 geschaltet wird, um den zweiten Kondensator zu entladen. Durch gleichzeitiges Schalten des ersten Schalters und des zweiten Schalters in die jeweilige erste Schaltung werden das Piezoelement und der zweite Kondensator parallelgeschaltet, so dass sich die Entladekurve des zweiten Kondensators und die Entladekurve des Piezoelements kompensieren. Auf diese Weise wird der Messeingang des Operationsverstärkers im Wesentlichen nur durch die Oszillationen des Piezoelements beaufschlagt, welche somit besser verstärkt werden können als ohne Kompensation der Entladekurven.

### Bezugszeichenliste

- 1: Vortex-Durchflussmessgerät
- 10: Messrohr
- 11: Messrohrwandung
- 12: Messrohrlumen
- 13: Öffnung
- 20: Staukörper
- 30: Sensorvorrichtung
- 31: Paddel
- 32: Sensorgrundkörper
- 32.1: Rückseite
- 33: Piezoelement
- 34: elektrische Anbindung
- 40: elektronische Betriebsschaltung
- 50: Messchaltung
- 51: Operationsverstärker
- 51.1: invertierender Eingang
- 51.2: nichtinvertierender Eingang
- 51.3: Ausgang
- 52.1: erster Kondensator
- 52.2: zweiter Kondensator
- 53.1: erster Schalter
- 53.11: erste Schalterstellung
- 53.12: zweite Schalterstellung
- 53.2: erster Schalter
- 53.21: erste Schalterstellung
- 53.22: zweite Schalterstellung
- 60: Auswerteschaltung
- 80: Gehäuse
- 100: Verfahren
- 101: erster Verfahrensschritt
- 102: zweiter Verfahrensschritt
- 103: dritter Verfahrensschritt
- MS: Messsignal
- LS1: erste Ladespannung
- LS2: zweite Ladespannung
- RS1: erste Referenzspannung
- RS2: zweite Referenzspannung
- R: Rohrleitung

## Patentansprüche

1. Vortex-Durchflussmessgerät (1) zum Messen eines Durchflusses eines durch eine Rohrleitung (R) strömenden Mediums umfassend:
ein Messrohr (10) zum Führen des Mediums mit einer Messrohrwandung (11) und einem durch die Messrohrwandung ausgebildeten Messrohrlumen (12), wobei die Messrohrwandung eine Öffnung (13) aufweist;
einen im Messrohr angeordneten Staukörper (20);
eine Sensorvorrichtung (30), welche dazu eingerichtet ist, durch den Staukörper verursachte Strömungswirbel zu erfassen,
wobei die Sensorvorrichtung ein Paddel (31), einen Sensorgrundkörper (32) und ein Piezoelement (33) aufweist,
wobei der Sensorgrundkörper in der Öffnung (13) angeordnet ist und mit der Messrohrwandung mediendicht abschließt,
wobei das Paddel (31) in das Messrohrlumen hineinragt und dazu eingerichtet ist, von Strömungswirbeln aus einer kräftefreien Ruheposition ausgelenkt zu werden,
wobei das Piezoelement (33) auf einer dem Messrohr abgewandten Rückseite (32.1) des Sensorgrundkörpers angeordnet ist und dazu eingerichtet ist, durch Auslenkungen des Paddels verursachte Verformungen des Sensorgrundkörpers zu erfassen und in ein elektrisches Messsignal zu wandeln;
eine elektronische Betriebsschaltung (40), welche dazu eingerichtet ist, das Messsignal mittels einer Auswerteschaltung (60) zu erfassen und auszuwerten und Durchflussmesswerte bereitzustellen,
wobei die elektronische Betriebsschaltung eine Messschaltung (50) umfassend einen Operationsverstärker (51) mit einem invertierenden Eingang (51.1), einem nichtinvertierenden Eingang (51.2) und einem Ausgang (51.3) sowie einen ersten Kondensator (52.1) aufweist,
wobei der erste Kondensator (52.1) eine Rückkopplung zwischen dem Ausgang und dem invertierendem Eingang (51.1) oder dem nichtinvertierenden Eingang (51.2) ausbildet, wobei der jeweilige Eingang ein Messeingang ist,
wobei der jeweils andere Eingang (51.1, 51.2) ein Referenzeingang ist und mit einer ersten Referenzspannung (RS1) beaufschlagbar ist, und wobei der Ausgang mit einer Auswerteschaltung der elektronischen Betriebsschaltung verbunden ist,
wobei das Piezoelement auf einer dem Operationsverstärker abgewandten Seite mit einer zweiten Referenzspannung (RS2) beaufschlagbar ist, welche insbesondere gleich zur ersten Referenzspannung ist,
wobei die Messschaltung einen ersten Schalter (53.1) aufweist,
wobei die elektronische Betriebsschaltung (40) dazu eingerichtet ist, das Piezoelement über den ersten Schalter (53.1) mittels einer ersten Schalterstellung (53.11) mit dem Messeingang des Operationsverstärkers zu verbinden und mittels einer zweiten Schalterstellung (53.12) mit einer ersten Ladespannung (LS1) zu laden,
wobei die elektronische Betriebsschaltung mittels der Auswerteschaltung dazu eingerichtet ist, aus einem Entladevorgang des Piezoelements eine Information bzgl. eines Zustands des Piezoelements und/oder einer elektrischen Verbindung des Piezoelements mit der elektronischen Betriebsschaltung und/oder einer mechanischen Verbindung mit dem Sensorgrundkörper abzuleiten.

2. Vortex-Durchflussmessgerät nach Anspruch 1,
wobei die Messchaltung (50) einen zweiten Kondensator (52.2) und einen zweiten Schalter (53.2) aufweist,
wobei der zweite Kondensator mit der zweiten Referenzspannung beaufschlagbar ist,
wobei die elektronische Betriebsschaltung (40) dazu eingerichtet ist, den zweiten Kondensator über den zweiten Schalter (53.2) mittels einer ersten Schalterstellung (53.21) mit dem Messeingang des Operationsverstärkers zu verbinden und mittels einer zweiten Schalterstellung (53.22) mit einer zweiten Ladespannung (LS2) zu laden,
wobei die erste Ladespannung und die zweite Referenzspannung eine erste Differenzspannung definieren, und wobei die zweite Ladespannung und die zweite Referenzspannung eine zweite Differenzspannung definieren,
wobei die zweite Differenzspannung eine zur ersten Differenzspannung umgekehrte Polarität aufweist,
wobei der zweite Kondensator und das Piezoelement über die Schalter (53.1, 53.2) mittels der jeweiligen ersten Schalterstellung (53.11, 53.21) parallelschaltbar sind.

3. Vortex-Durchflussmessgerät nach Anspruch 2,
wobei die elektronische Betriebsschaltung (40) dazu eingerichtet ist, bezüglich der zweiten Referenzspannung das Piezoelement (33) mit einer ersten Ladung und den zweiten Kondensator mit einer zweiten Ladung zu laden,
wobei ein Betrag der ersten Ladung und ein Betrag der zweiten Ladung weniger als 10% und insbesondere weniger als 5% von einem Mittelwert der Ladungen abweichen.

4. Vortex-Durchflussmessgerät nach Anspruch 2 oder 3,
wobei der Operationsverstärker einen Eingangsspannungsbereich mit einem ersten Grenzwert und einem zweiten Grenzwert und einen Mittelwert aufweist, wobei die erste Referenzspannung weniger als 10%, und insbesondere weniger als 5% und bevorzugt weniger als 3% vom Mittelwert abweicht.

5. Vortex-Durchflussmessgerät nach einem der Ansprüche 2 bis 4,
wobei das Piezoelement eine Maximalkapazität aufweist, wobei der zweite Kondensator eine Nennkapazität aufweist,
wobei Nennkapazität mindestens 5% und insbesondere mindestens 10% und bevorzugt mindestens 20% größer ist als die erste Maximalkapazität.

6. Verfahren (100) zum Überprüfen eines Piezoelements (33) eines Vortex-Durchflussmessgeräts (1) nach einem der vorigen Ansprüche,
wobei in einem ersten Verfahrensschritt (101) der erste Schalter (53.1) aus der ersten Schalterstellung (53.11) in die zweite Schalterstellung (53.12) geschaltet wird, um das Piezoelement zu laden,
wobei nach Laden des Piezoelements (33) in einem zweiten Verfahrensschritt (102) der erste Schalter in die erste Schalterstellung geschaltet wird, um das Piezoelement zu entladen,
wobei die elektronische Betriebsschaltung (40) den Entladevorgang erfasst und in einem dritten Verfahrensschritt (103) aus einem Entlademesssignal eine Information bezüglich eines Zustands des Piezoelements (33) und/oder einer elektrischen Anbindung (34) des Piezoelements ableitet.

7. Verfahren nach Anspruch 6, sofern rückbezogen auf einen der Ansprüche 2 bis 5,
wobei im ersten Verfahrensschritt (101) der zweite Schalter (53.2) aus einer ersten Schalterstellung (53.21) in eine zweite Schalterstellung (53.22) geschaltet wird, um den zweiten Kondensator (52.2) zu laden,
wobei im zweiten Verfahrensschritt (102) gleichzeitig zum ersten Schalter (53.1) der zweite Schalter (53.2) in die jeweilige erste Schalterstellung (53.11, 53.21) geschaltet wird, um den zweiten Kondensator zu entladen.

## Claims

1. Vortex flowmeter (1) for measuring a flow rate of a fluid passing through a pipeline (R) of the flowing medium comprising:
a measuring tube (10) for guiding the medium with a measuring tube wall (11) and a measuring tube lumen (12) formed by a measuring tube wall, wherein the measuring tube wall has an opening (13);
a bluff body (20) arranged in the measuring tube;
a sensor device (30) which is adapted to detect flow vortices caused by the damming body,
wherein the sensor device comprises a paddle (31), a sensor base body (32) and a piezoelectric element (33),
wherein the sensor base body is arranged in the opening (13) and seals with the measuring tube wall in a media-tight manner,
wherein the paddle (31) projects into the measuring tube lumen and is adapted to be moved from flow vortices from a force-free rest position,
wherein the piezo element (33) is arranged on a rear side (32.1) of the sensor base body facing away from the measuring tube and is adapted to detect deformations of the sensor base body caused by deflections of the paddle and to convert them into an electrical measuring signal;
an electronic operating circuit (40) which is adapted to detect and evaluate the measurement signal by means of an evaluation circuit (60) and to provide flow measurement values,
wherein the electronic operating circuit has a measuring circuit (50) comprising an operational amplifier (51) with an inverting input (51.1), a non-inverting input (51.2) and an output (51.3) as well as a first capacitor (52.1),
wherein the first capacitor (52.1) forms a feedback between the output and the inverting input (51.1) or the non-inverting input (51.2), the respective input being a measurement input, wherein the respective other input (51.1, 51.2) is a reference input and a first reference voltage (RS1) can be applied to it, and wherein the output is connected to an evaluation circuit (RS1) of the electronic operating circuit,
wherein the piezo element is connected on a side facing away from the operational amplifier with a second reference voltage (RS2), which in particular is equal to the first reference voltage,
wherein the measuring circuit has a first switch (53.1),
wherein the electronic operating circuit (40) is adapted to connect the piezo element via the first switch (53.1) to the measurement input of the operational amplifier by means of a first switch position (53.11) and to charge it with a first charging voltage (LS1) by means of a second switch position (53.12),
wherein the electronic operating circuit is adapted by means of the evaluation circuit to derive from a discharging process of the piezo element information regarding a state of the piezo element and/or of an electrical connection of the piezo element to the electronic operating circuit and/or a mechanical connection to the sensor base body.

2. Vortex flowmeter according to claim 1,
wherein the measuring circuit (50) has a second capacitor (52.2) and a second switch (53.2) wherein the second capacitor can be supplied with the second reference voltage,
wherein the electronic operating circuit (40) is set up to connect the second capacitor via
the second switch (53.2) by means of a first switch position (53.21) to the measuring input of the
operational amplifier and by means of a second switch position (53.22) to a second charging voltage (LS2),
the first charging voltage and the second reference voltage defining a first differential voltage, and the second charging voltage and the second reference voltage defining a second differential voltage,
the second differential voltage having a polarity that is reversed'with respect to the first differential voltage
the second capacitor and the piezoelectric element being connectable in parallel via the switches (53.1, 53.2) by means of the
respective first switch position (53.11, 53.21) are connectable in parallel.

3. Vortex flowmeter according to claim 2,
wherein the electronic operating circuit (40) is configured to
30 charge the piezoelectric element (33) with a first charge and the second capacitor
with a second charge with respect to the second reference voltage,
wherein an amount of the first charge and an amount of the second charge deviate less than 10%, and in particular less than 5%, from a mean value of the charges.

4. Vortex flowmeter according to claim 2 or 3,
wherein the operational amplifier has an input voltage range with a first limit value and 5 a second limit value and a mean value, wherein the first reference voltage deviates by less than 10%, and in particular less than 5%, and preferably less than 3%, from the mean value.

5. Vortex flowmeter according to one of claims 2 to 4,
wherein the piezoelectric element has a maximum capacitance, wherein the second capacitor has a nominal capacitance,
wherein the nominal capacitance is at least 5%, and in particular at least 10%, and preferably at least
20% greater than the first maximum capacitance.

6. A method (100) for checking a piezoelectric element (33) of a vortex flowmeter (1) according to one of the previous claims,
wherein in a first method step (101) the first switch (53.1) is switched from the first
switch position (53.11) to the second switch position (53.12) in order to charge the piezoelectric element
wherein, after charging of the piezoelectric element (33), the first switch is switched to the first switch position in a second process step (102) in order to discharge the piezoelectric element,
wherein the electronic operating circuit (40) detects the discharging process and
in a third process step (103) derives from a discharging measuring signal an information item relating to a state
of the piezoelectric element (33) and/or an electrical connection (34) of the piezoelectric element.

7. Method according to claim 6, insofar as it relates to one of claims 2 to 5,
wherein in the first method step (101) the second switch (53.2) is switched from a first switch position
(53.21) to a second switch position (53.22) in order to charge the second capacitor (52.2)
wherein in the second process step (102) the second switch (53.2) is switched to the respective first switch position (53.11, 53.21) at the same time as the first switch (53.1) in order to discharge the second capacitor.

## Revendications

1. Débitmètre à vortex (1) pour mesurer le débit d'un fluide passant dans une canalisation (R) du fluide en circulation comprenant:
un tube de mesure (10) pour guider le fluide avec une paroi de tube de mesure (11) et
une lumière de tube de mesure (12) formée par une paroi de tube de mesure, dans laquelle la paroi de tube de mesure a une ouverture (13) ;
un corps de tampon (20) placé dans le tube de mesure ;
un dispositif de détection (30) qui est adapté pour détecter les tourbillons d'écoulement causés par le corps de barrage,
dans lequel le dispositif de détection comprend une palette (31), un corps de base du capteur (32) et un élément piézoélectrique (33),
dans lequel le corps de base du capteur est placé dans l'ouverture (13) et scelle la paroi du tube de mesure de manière étanche aux fluides,
dans lequel la palette (31) fait saillie dans la lumière du tube de mesure et est adaptée pour être déplacée à partir des tourbillons d'écoulement à partir d'une position de repos sans force,
l'élément piézoélectrique (33) est disposé sur une face arrière (32.1) du corps de base du capteur, à l'opposé du tube de mesure, et est adapté pour détecter les déformations du corps de base du capteur causées par les déflexions de la palette et pour les convertir en un signal de mesure électrique ;
un circuit de commande électronique (40) qui est adapté pour détecter et évaluer le signal de mesure au moyen d'un circuit d'évaluation (60) et pour fournir des valeurs de mesure du débit,
dans lequel le circuit électronique de commande comporte un circuit de mesure (50) comprenant un amplificateur opérationnel (51) avec une entrée inverseuse (51.1), une entrée non inverseuse (51.2) et une sortie (51.3) ainsi qu'un premier condensateur (52.1),
dans lequel le premier condensateur (52.1) forme une rétroaction entre la sortie et l'entrée inverseuse (51.1) ou l'entrée non inverseuse (51.2), l'entrée respective étant une entrée de mesure,
dans lequel l'autre entrée respective (51.1, 51.2) est une entrée de référence et une première tension de référence (RS1) peut lui être appliquée, et dans lequel la sortie est connectée à un circuit d'évaluation (RS1) du circuit de commande électronique,
dans lequel l'élément piézoélectrique est relié, du côté opposé à l'amplificateur opérationnel, à une deuxième tension de référence (RS2), qui est notamment égale à la première tension de référence,
dans lequel le circuit de mesure comporte un premier commutateur (53.1),
dans lequel le circuit électronique de commande (40) est adapté pour connecter I 'élément piézo via le premier commutateur (53.1) à l'entrée de mesure de l'amplificateur opérationnel au moyen d'une première position de commutateur (53.11) et pour le charger avec une première tension de charge (LS1) au moyen d'une deuxième position de commutateur (53.12),
dans lequel le circuit électronique de commande est adapté, au moyen du circuit d'évaluation, pour tirer d'un processus de décharge de l'élément piézoélectrique des informations concernant l'état de l'élément piézoélectrique et/ou d'une connexion électrique de l'élément piézoélectrique au circuit électronique de commande et/ou d'une connexion mécanique au corps de base du capteur.

2. Débitmètre à vortex selon la revendication 1,
dans lequel le circuit de mesure (50) comporte un second condensateur (52.2) et un second interrupteur (53.2)
dans lequel le second condensateur peut être alimenté par la seconde tension de référence,
dans lequel le circuit électronique de commande (40) est configuré pour connecter le second condensateur via
le deuxième interrupteur (53.2) par une première position de l'interrupteur (53.21) à l'entrée de mesure de l'amplificateur opérationnel et par une deuxième position de l'interrupteur (53.22) à l'entrée de mesure de la
l'amplificateur opérationnel et par une deuxième position du commutateur (53.22) à une seconde tension de charge (LS2),
la première tension de charge et la deuxième tension de référence définissent une première tension différentielle, et la deuxième tension de charge et la deuxième tension de référence définissent une deuxième tension différentielle, - la première tension de charge et la deuxième tension de référence définissent une première tension différentielle.
tension différentielle,
la seconde tension différentielle a une polarité inversée par rapport à la première tension différentielle
le second condensateur et l'élément piézoélectrique peuvent être connectés en parallèle via les commutateurs (53.1, 53.2) au moyen de la première position de commutation (53.11) respective .
La première position de l'interrupteur (53.11, 53.21) est connectable en parallèle.

3. Débitmètre à vortex selon la revendication 2,
dans lequel le circuit électronique de fonctionnement (40) est configuré pour
30 charger l'élément piézoélectrique (33) d'une première charge et le second condensateur
d'une seconde charge par rapport à la seconde tension de référence,
dans lequel une quantité de la première charge et une quantité de la deuxième charge s'écartent de moins de 10 %, et en particulier de moins de 5 %, d'une valeur moyenne des charges.

4. Débitmètre à vortex selon la revendication 2 ou 3,
dans lequel l'amplificateur opérationnel a une plage de tension d'entrée avec une première valeur limite et une seconde valeur limite, et une valeur moyenne.
5 une seconde valeur limite et une valeur moyenne, dans laquelle la première tension de référence s'écarte de moins de 10 %, et en particulier de moins de 5 %, de la valeur moyenne des charges.
moins de 10%, et en particulier moins de 5%, et de préférence moins de 3%, par rapport à la valeur moyenne.

5. Débitmètre à vortex selon l'une des revendications 2 à 4,
dans lequel l'élément piézoélectrique a une capacité maximale, dans lequel le second condensateur a une capacité nominale,
dans lequel la capacité nominale est supérieure d'au moins 5 %, et en particulier d'au moins 10 %, et de préférence d'au moins 20 % à la première capacité maximale.
20 % supérieure à la première capacité maximale.

6. Procédé (100) de contrôle d'un élément piézoélectrique (33) d'un débitmètre à tourbillons (1) selon l'une des revendications précédentes,
dans lequel, dans une première étape de la méthode (101), le premier commutateur (53.1) est commuté de la première position de commutateur (53.11) à la première position de commutateur (53.12).
position de commutation (53.11) à la deuxième position de commutation (53.12) afin de charger l'élément piézoélectrique
dans lequel, après le chargement de l'élément piézoélectrique (33), le premier interrupteur est commuté sur la première position d'interrupteur dans une deuxième étape du processus (102) afin de décharger l'élément piézoélectrique,
le circuit électronique de commande (40) détecte le processus de décharge et
dans une troisième étape du processus (103), déduit d'un signal de mesure de décharge une information relative à l'état de l'élément piézoélectrique (102), dans laquelle le circuit électronique de commande (40) détecte le processus de décharge et
de l'élément piézoélectrique (33) et/ou d'une connexion électrique (34) de l'élément piézoélectrique.

7. Procédé selon la revendication 6, dans la mesure où il se rapporte à l'une des revendications 2 à 5,
dans lequel, au cours de la première étape de la méthode (101), le deuxième interrupteur (53.2) est commuté d'une première position d'interrupteur (53.21) à une deuxième position d'interrupteur (53.21).
(53.21) à une deuxième position de commutation (53.22) afin de charger le deuxième condensateur (52.2)
dans laquelle, au cours de la deuxième étape du processus (102), le deuxième interrupteur (53.2) est commuté sur la première position de commutation respective (53.11, 53.21) en même temps que le premier interrupteur (53.1) afin de décharger le deuxième condensateur.
